# EUROPEAN PATENT SPECIFICATION

(11) **EP 2 036 373 B1**
(45) Date of publication and mention of the grant of the patent: **02.05.2012**
(21) Application number: 07733361.5
(22) Date of filing: 26.06.2007
(51) Int. Cl.: H04W 88/02

(54) **A METHOD OF OPERATING A DUAL SIM WIRELESS COMMUNICATIONS DEVICE**
VERFAHREN ZUM BETRIEB EINES DRAHTLOSEN DOPPEL-SIM-KOMMUNIKATIONSGERÄTS
PROCÉDÉ POUR FAIRE FONCTIONNER UN DISPOSITIF DE COMMUNICATION SANS FIL À DEUX SIM

(30) Priority: 26.06.2006 GB 0612634
(43) Date of publication of application: 18.03.2009
(73) Proprietor: Uniforce Tech L.L.C., Dover DE 19904 (US)
(72) Inventor: WONG, Lawrence, London SE1 8HP (GB)
(74) Representative: Small, Gary James
(86) International application number: PCT/GB2007/002368
(87) International publication number: WO 2008/001061

(56) References cited:
- WO-A-01/30097
- WO-A-2005/069657
- DE-A1- 10 138 835
- DE-A1- 10 342 530
- DE-A1- 19 823 074

## Description

The invention discloses an improved method of operating a wireless telecommunications device, and in particular, a method of operating a dual SIM wireless communications device

The term 'wireless telecommunications device' includes any digital or other device capable of wireless communications, which includes without limitation, Mobile Telephones and Smartphones together with any computing devices with such capabilities. These may include Desktop and Laptop computers, Personal Digital Assistants (PDAs), Digital Cameras and Digital Music together with converged devices incorporating the functionality of one or more of the classes of such devices, together with many other industrial and domestic electronic appliances.

For simplicity, the description of this invention primarily references mobile telephone handsets; however, such references should be expansively construed to refer to any wireless telecommunications devices with comparable functionality.

Since the first commercial services began in 1991, GSM (*Groupe Spécial Mobile or Global System for Mobile communications*) has become the most widely used technology for mobile wireless telecommunications, with about 75% of the worldwide market, and over 1.5 billion subscribers on over 100 different GSM compatible networks. The system has evolved through GPRS (*General Packet Radio Services*) and EDGE (*Enhanced Data rates for GSM Evolution*) to 3GSM (*Third Generation GSM*) networks.

All GSM devices incorporate a SIM (*Subscriber Identity Module*) card which holds all the information needed for the GSM Network Provider to establish the identity of the person using the phone, allocate the appropriate telephone number, and bill the costs of any calls to the appropriate account holder. When the SIM card is moved from one GSM handset to another GSM handset, the identity of the subscriber moves with it. Similarly, the removal of the SIM card from a GSM handset and its replacement with another SIM card results in the GSM handset identifying itself to the network as a different subscriber and being allocated a different telephone number.

It is becoming increasingly common for individuals to have more than one GSM subscription. There may be a number of reasons for this:
- People may use one GSM number for work or business calls, and another for personal calls, either for reasons of convenience, or for easier accounting, or because their employer pays for them to have a work SIM.
- Different GSM networks are largely compatible, and a SIM issued by and registered on one network (usually referred to as the *home network*) may be used on a completely different GSM network run by a different operator; this is known as *roaming.* While *national roaming* between different GSM networks in the same country is not unknown, most network operators do not allow it, as it unecessarily diverts a portion of their call revenues to their domestic competitors. Roaming is most common when subscribers travel to different countries; this is known as *International* or *Global* roaming, and is widely perceived as one of the key benefits of GSM technologies. However, it is well known that the call charges levied by a network operator on both incoming and outgoing calls when a subscriber is away from their home network and roaming internationally are often an order of magnitude greater than would normally be applied. In order to avoid these excessive roaming charges, people may purchase local SIM cards for use in the country where they will be travelling. This is especially popular where a country border can be crossed by land (e.g. between Hong Kong and Mainland China).

Although increasing numbers of people possess multiple SIMs, it remains the case that GSM mobile phones are designed and sold for use with only one SIM card. This forces users with dual SIMs to adopt one of two solutions:
- Swap SIM cards when they need to use an alternate GSM account. On most GSM phones, this requires the phone to be switched off and the battery removed in order to gain access to the SIM holder; this is a relatively complex operation which is difficult to accomplish on the move, as it can require juggling a phone, a battery, a battery cover and two SIMs. Furthermore, once a SIM is removed from a handset, calls to that number have to be diverted, which involves extra expense for the subscriber (either to pick up voicemail or to pay for a call diversion).
- Carry two mobile phones, one for each SIM. This ensures that no calls to either SIM will be lost. However, most people regard having to carry multiple phones and chargers as an inconvenience. The additional expense of a second handset is also a deterrent.

The problems caused by the inability of GSM handsets to support more than a single SIM at any one time is well-known, and there have been a number of attempts to overcome the problem.

Examples of prior art which adapts handsets to make use of two SIM cards include the disclosures of EP 0586081 from Nokia Mobile Phones and AU 1953299 from Newcom Technologies PTY Ltd, both of which describe a digital mobile telephone capable of holding multiple SIMS, only one of which can be active at any one time. Such devices have been commercially manufactured; the Benefon Twin+ handset is an example of a prior device in this area. This GSM telephone had two SIM sockets, but could only support one SIM at a time. The phone had to be switched off and then switched on again in order to change SIM. The user manual for this device can be obtained from http://benefon.com/products/twin/.

Other examples of similar art include dual or even triple SIM adapters such as those marketed under the 'Ghost' brand by various resellers, and those sold by companies such as Magicsim (http://www.magicsim.com/). All these adapters are similar to the Benefon Twin+ in that they require the telephone to be switched off and on again when SIMs are changed. For some of these devices, the SIMs alternate on each power cycle. Others have a mechanical switch that can be used to select the desired subscriber identity. The Magicsim devices use SIM Tookit commands to enable the user to select the desired SIM from an on-screen menu.

See http://www.m-99.co.uk/Mobile_Phone_Twin_SIM_adapters/GVC_Ghost _Dual_and_Triple_SIM_/gvc_ghost_dual_and_triple_sim_.html for a summary of these devices. While these devices do solve the mechanical problem outlined above, in that the user no longer has to juggle both SIMs, the telephone, the battery and the battery cover at the same time, they have a key deficiency in that they do not permit a subscriber to have both SIMs active at the same time.

While one SIM is selected, it disables the alternate SIM and cannot make use of it; when calls are made to its telephone number, it appears to the network as if the phone is turned off. A user would therefore miss both incoming calls and any text messages or other forms of data communication directed at the inactive SIM card. These would therefore be either diverted or stored; picking up these messages generally costs the user time and/or money, and can result in delays in receiving messages.

The only method disclosed to date for supporting simultaneous multiple SIMs in a GSM telephone is equivalent to building two separate phones in the same case with the same power supply, akin to Siamese twins. Such a telephone has been disclosed in patent WO99/41921 from Telital SPA. It duplicates all the hardware and software required to enable a wireless GSM connection for each SIM (i.e. a second processor, power amplifier and controller, transceiver, frequency synthesizer, base band unit, DSP, SIM holder and electronics). This allows users to switch between the two SIMs for making calls and have both SIMs active simultaneously for receiving calls and messages.

However, the constraints of mobile telephone manufacturing costs and battery life mean this is not a commercially feasible solution; no handsets implemented the Telital patent are known to have ever been available.

DE 10342530 relates to a mobile telephone having a device for receiving and connecting at least two subscriber identity module (SIM) cards, at least two of which can be operated at the same time, without having to replace one with another. Internal control device manages connected SIM cards and controls data communication via the at least two cards.

WO 0130097 relates to a radio station which is provided with several user identification modules that are allocated to different communications networks. Said radio station is simultaneously logged into different communications networks on the basis of said different user identification modules.

WO 2005069657 relates to the selection of a mobile radio subscriber identity of a mobile radio subscriber with several mobile radio subscriber cards, wherein the selection is carried out by means of a method which takes into account conditions which are predefined by the subscriber.

DE 19823074 relates to a station comprising a device for two or more subscriber identification modules (SIM1 to SIMn) which have subscriber profile data sets stored in a home location register (HLR) of a network (PLMN) and in the mobile station. An activation/deactivation device selectively activates/deactivates one or more subscriber identification modules for communication via the network.

The present invention enables a single GSM mobile telephone to support two SIMs simultaneously using only a single GSM radio.

According to a first aspect described herein there is provided a method of operating a wireless telecommunications device containing multiple subscriber identities which have been allocated by one or a plurality of wireless networks by which the said multiple subscriber identities are enabled and activated for simultaneous use on a single wireless network.

The device may be:
a. configured to enable to support multiple active instances of logical control channels each of which is assigned to a specific subscriber identity; and
b. configured to register each subscriber identity with the network in turn; and
c. configured to move each subscriber identity to idle mode when it monitors the logical control channels assigned to each; and
d. configured to respond to a notification on the logical control channel addressed to a specific subscriber identity by requesting dedicated traffic channel for that subscriber identity and moving to active traffic mode only for that subscriber identity while other subscriber identities registered on the handset remain in idle mode.

The wireless telecommunications device may maintain separate memory storage for data and messages associated with each subscriber identity.

According to a second aspect described herein there is provided a computing device arranged to operate in accordance with a method of the first aspect.

According to a third aspect described herein there is provided an operating system for causing a computing device to operate in accordance with the first aspect.

Embodiments will now be described, by way of further example only, with reference to the accompanying drawings, in which:-
Figure 1 shows an architecture for a GSM telephone network;
Figure 2 shows a procedure for GSM subscriber authentication and registration which occurs when a SIM based handset requests a communication channel to be established with a subscriber network; and
Figure 3 shows an embodiment of the present invention.

The present invention enables a single GSM mobile telephone to support two SIMs simultaneously using only a single GSM radio.

In order to understand the preferred implementation of this invention, it is necessary to be familiar with some of the interactions between the SIM and the GSM cellular telephone network. These will now be described.

### Major GSM network components

The major elements of the GSM telephone network are:
- the Mobile Station (*MS*); this consists of the mobile telephone handset, commonly referred to as the Mobile Equipment (*ME*) together with the Subscriber Identification Module (*SIM*).
- the Base Station subsystem (*BSS*). This consists of a number of Base Transceiver Stations (*BTS*), which manage the transmission and reception over the radio (or *air*) interface, together with a Base Station Controller (*BSC*) which controls the BTSs by allocating, releasing and handing over radio channels.

- the Network Switching Subsystem (*NSS*) which links the BSCs to a Mobile services Switching Centre (*MSC*) and thence to wider telephone and data networks such as the Public Switched Telephone Network (*PSTN*), the Packet Switched Public Data Network (*PSPDN*) and the Integrated Services Digital Network (*ISDN*).
- Associated with the NSS are a number of entities used for identification and administration purposes:
   ○ the Home Location Register (*HLR*) which holds persistent subscriber data together with the current VLR (see below)
   ○ the Authentication Centre (*AuC*) which is responsible for subscriber authentication; this is usually associated with the HLR
   ○ the Visitor Location Register (*VLR*) which holds information concerning the Mobile Stations which are in a specific area
   ○ the Equipment Identity Register (*EIR*) which holds information relating to manufacturer, models identities of Mobile Stations.

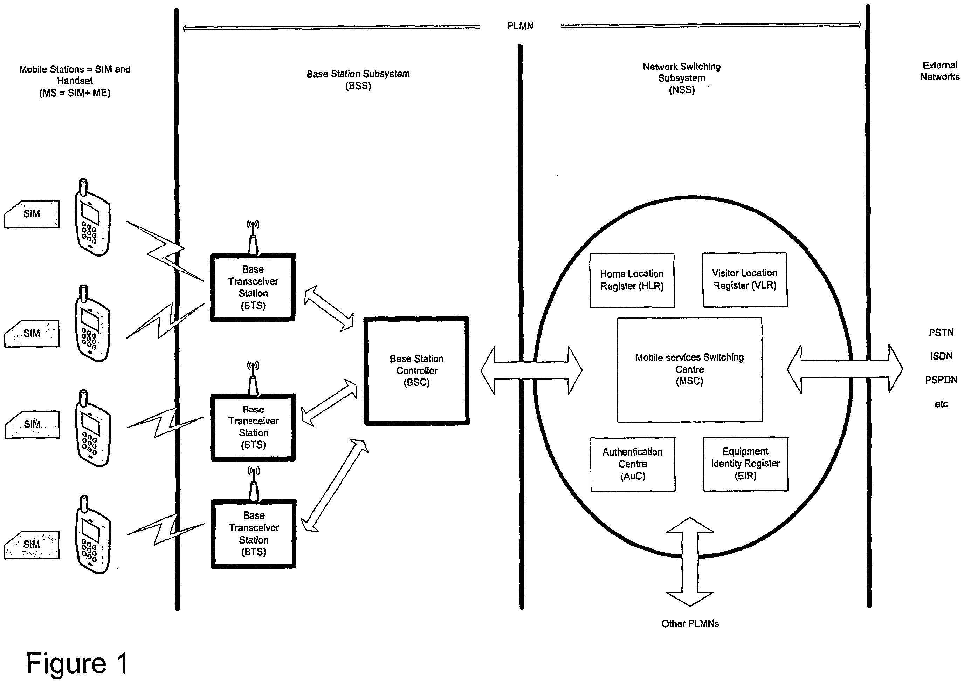

This simplified architecture is shown in Figure 1. Note that the Network Switching Subsystems owned by the various GSM networks are able to communicate with each other; this ability is what enables subscriber roaming. A single GSM network is often referred to as a Private Land Mobile Network (*PLMN*).

### GSM SIM cards

A GSM SIM contains two unique numbers, which are allocated by the network operator. The first of these is known as the International Mobile Subscriber Identifier (*IMSI*), and is used to identify the SIM to any GSM network to which the mobile equipment containing the SIM wishes to connect. The SIM includes codes for the country and PLMN as well as the individual subscriber. The second unique number stored in the SIM is known as the *Ki*. This is kept private even from the subscriber; it cannot be read from the SIM, and is never transmitted over the air. Both the IMSI and the Ki are each unique to the SIM in which they are stored. The PLMN which issued the SIM keeps copies of each IMSI and Ki which it has issued, normally in the HLR.

### GSM signalling

GSM signalling provides a method of communicating between a BSS and a number of MSs by dividing up the *physical* communication channels in use into a number of *logical* channels, which are defined by recurring patterns of timeslots and frequencies. One physical channel can support many logical channels.

Some of these logical channels are termed *common control channels* (*CCCHs*), and are typically shared by every MS in a particular cell for communicating when any particular MS is in *idle mode* (not engaged in a call).
- Among these channels are the Frequency Correction Channel (*FCCH*) and the Synchronisation Channel (*SCH*), which are used by the BSS to transmit information that is used by an MS to identify and subsequently establish communications with that BSS. The Broadcast Control Channel (*BCCH*) is used by the BSS to transmit infrastructure information concerning network and cell ID, and frequencies to be used by the other channels. These are common control channels that are transmitted by the BSS to every MS in a cell, which only need to listen to these control channels when they require the information transmitted; for example, on power-up or before a location area handover.
- Other common control channels are used for communications between the BSS and a specific MS. The MS can send messages to the BSS on the shared Random Access Channel (*RACH*), which uses a slotted Aloha Collision Sense Multiple Access (*CSMA*) protocol similar to that used by other network topologies sharing a common transmission medium. The BSS sends control information to the MS on the Paging and Access Grant Channel (*PAGCH*); this is a slotted protocol divided into a number of sub-channels, with the MS waking up to listen only to its allocated sub-channel and conserving power by switching its radio off at other times.

Other logical channels are used for the transfer of data to and from one particular MS when it is in dedicated mode. These include a number of *dedicated control channels*, such as the bidirectional Stand-Alone Dedicated Control Channel (*SDDCH*) used for authentication, together with the main *traffic channels* used for transfer of data such as voice.

### GSM subscriber registration and authentication

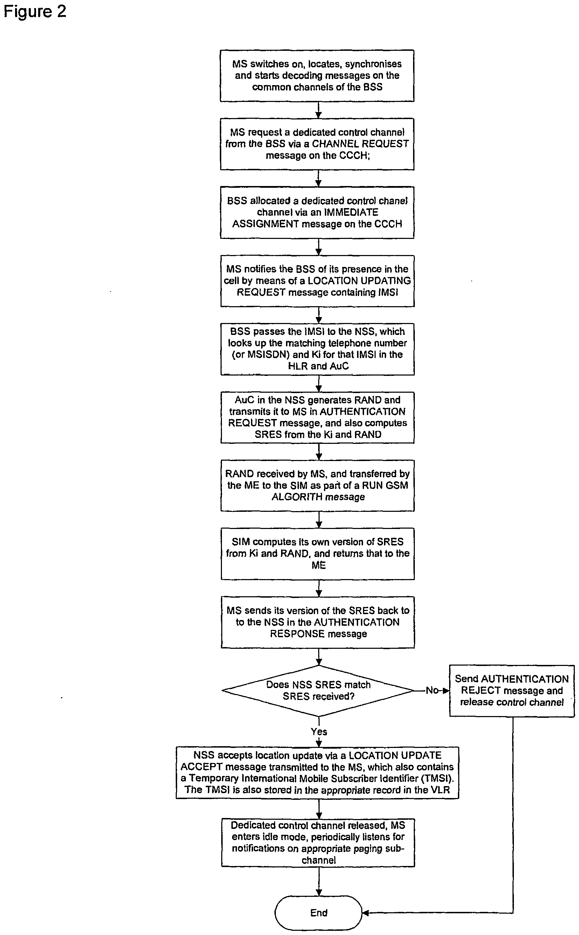

A full account of this procedure can be found in ETSI 04.08. However, a simplified account of one typical case of a single SIM telephone registering with a new cell in a GSM network will now be described with reference to figure 2.
1. When the MS is switches on, it locates, synchronises with, and starts decoding messages on the common control channels of the BSS.
2. The MS request a dedicated control channel from the BSS via a CHANNEL REQUEST message on the CCCH; the BSS allocates a dedicated control channel via an IMMEDIATE ASSIGNMENT message on the CCCH.
3. The MS notifies the BSS of its presence in the cell by means of a LOCATION UPDATING REQUEST message; this message contains the IMSI.
4. The BSS passes the IMSI to the NSS, which looks up the matching telephone number (or *MSISDN*) and Ki for that IMSI in the HLR and AuC.
5. The AuC in the NSS generates a random number (*RAND*) that is transmitted back to the MS as part of a AUTHENTICATION REQUEST message. The AuC also computes a unique key, known as a Signed Result (*SRES*) from the Ki allocated to the SIM and the RAND.
6. This random number is received in the MS, and transferred by the ME to the SIM as part of a RUN GSM ALGORITHM message; the SIM computes its own version of the SRES Result (*SRES*) from the Ki allocated to the SIM and the RAND, and returns that to the ME.
7. The MS sends its version of the SRES back to the NSS in the AUTHENTICATION RESPONSE message.
8. The NSS authenticates the MS only if the SRES in the message matches the SRES which it has computed locally. Note that in the case of a roaming SIM, the NSS will need to contact the issuing PLMN to obtain the SRES.
9. Once authenticated, the NSS accepts the location update via a LOCATION UPDATE ACCEPT message transmitted to the MS, which also contains a Temporary International Mobile Subscriber Identifier (*TMSI*). The TMSI is also stored in the appropriate record in the VLR.
10. The dedicated control channel can now be released, and the MS enters *idle mode* during which it periodically listens for notification of calls and SMSs on the appropriate paging sub-channel (which is allocated according to an algorithm incorporating the last three digits of the IMSI). Messages from the BSS would be addressed to the MS over the common paging channels by means of its TMSI.

A key perception behind this invention is that the GSM protocols and authentication procedures make use of distinct logical control channels but do not necessarily require the use of separate *physical* control channels. Therefore, a device equipped with only a single GSM radio need not be restricted from registering and supporting multiple SIMs provided that those multiple SIMs can use the same common control channel. This is in fact the case where multiple SIMs can all be registered with the same BTS (so all the SIMs are in the same cell on the same network). The main limitation in respect of using multiple logical control channels is in fact a limitation of the ME; the handset needs to allow sufficient memory in its protocol stack for tracking multiple instantiations of the logical control channels. There is no need for multiple instances of any radio hardware, since the logical control channels for all the SIMs are carried on the same physical channel.

In fact, many GSM handsets currently available do allocate resources for multiple cases of the various common and dedicated control channels. These are used for such common GSM features such as call handoffs from cell to cell, supporting call holding, accepting second incoming calls, making conference calls and receiving SMS while in during the active mode. The BSS and the MS switch the communications context between the various control channels on demand to support relevant channels and sub-channels as required.

Some MEs already reserve resources for up to 6 logical control channels on power-up, in order to anticipate the worse case call scenario. In order to fully support multiple SIMs, more resources may need to be reserved, as the number of possible instantiations of logical control channels would be larger. Smartphones with access to unallocated resources in the form of heap memory may be able to allocate additional instantiations on the fly as needed.

As described above, multiple instantiations of the control channels can be used to allow a single handset with a single GSM radio to support the registration of multiple SIMs provided that all those SIMs are registered with the same BSS. Clearly, there is no problem with this if both SIMs have been issued by the same network provider. However, even where the SIMs have been issued by different network providers, registration with the same BSS is still possible by making use of the fact that roaming SIM cards can normally access any BSS belonging to any network within receiving range; so, for example, if able to roam in the UK, a SIM can access at least the PLMNs operated by Vodafone, 02, Orange and T-Mobile.

By means of this invention, therefore, multiple active SIM cards can be supported with the following permutations of SIM cards and PLMNs:
- Multiple SIM cards issued by the same network provider when used on their home PLMN - e.g. two or more UK Vodafone SIM cards can both be used on the UK Vodafone network.
- Multiple SIM cards issued by any network providers when all of them are being used away from their home PLMN, provided they are all enabled for roaming on the PLMN being visited- e.g. two or more roaming French Orange SIM cards can both be used when roaming on the UK Vodafone network.
- One or more SIM cards issued by the same network provider when used on their home PLMN, together with one or more SIM cards issued from any other network providers which are enabled for roaming on the PLMN being visited - e.g one UK Vodafone SIM card together with one roaming French Orange SIM card can both be used on the UK Vodafone network.

For the purposes of clarification it must be noted that the invention does not support permutations of SIM cards and PLMNs where the SIM cards are issued by different network providers, and where there is no locally available PLMN on which they can both roam; because in such cases, it would not be possible to register all SIMs on the same BSS. It follows, therefore, that a UK Vodafone SIM card and a UK Orange SIM card, even if both enabled for international roaming, cannot be used together in the UK, since no UK networks permit national roaming across UK PLMNs. However, the same combination of cards can be taken across the Channel, for example, and used with this invention on a PLMN operated by a non-UK network provider such as Orange France, SFR or Bouygues.

In a preferred implementation of this invention, an ME that is first switched on scans the available GSM networks to identify which one to select as the PLMN. Should one of the SIMs in the system be able to identify its home network, that PLMN should be given priority. This selection of the home network has the benefit of avoiding roaming charges for at least one SIM and should also offer a reasonable possibility that the second or further (roaming) SIMs can also successfully register on the same PLMN. If there is no home network available, but there is a PLMN that both SIMs can use, then the strongest of that type is chosen instead.

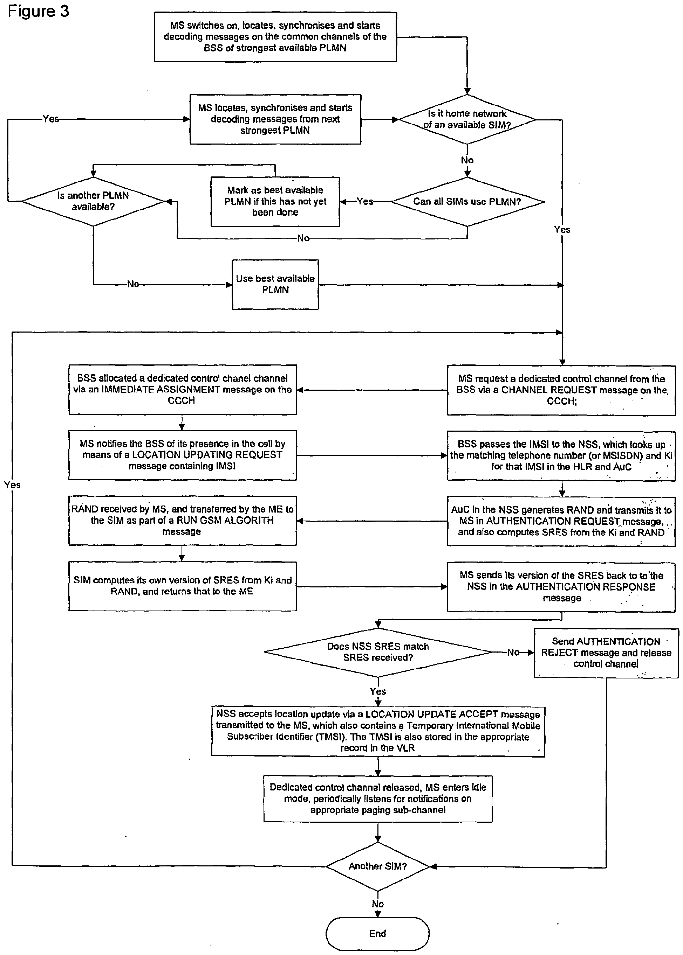

Once a PLMN has been selected, the registration of multiple SIMs requires a relatively straightforward software modification in the ME, which simply consists of iterating steps 2 to 10 of the GSM subscriber registration and authentication procedure outlined above for each SIM in the handset. This modified procedure, together with the selection of the PLMN, is shown diagrammatically in Figure 3.

Once the multiple registrations have been successfully completed the ME must now wake up periodically to monitor its paging channel(s). As described earlier, the paging channels in GSM are logical channels that are normally assigned by the BTS according to the last three digits of the IMSI. This is to group multiple subscribers onto a single paging channel for load balancing and battery/power management. This means that a device implementing this invention may, if its SIMs are allocated different paging channels, need to wake up more often, because the device must listen to each of the paging channels that are assigned to each of the authenticated SIM cards.

In this way the ME can receive a Mobile terminated call from any of its SIM cards that have been authenticated with the PLMN.

It can also make mobile originated calls from any of its authenticated SIM cards by requesting a dedicated channel via the RACH.

The implementation of this invention also requires
1. that the MS supports access to multiple simultaneous SIM cards. This may be provided either
   - by the MS having multiple physical SIM card interfaces, or
   - by multiplexing several SIM cards onto a single physical SIM card interface.
2. that there is sufficient memory in the ME to allow for the necessary multiple instantiations of logical control channels.
3. that the software in the ME handling the GSM protocol be modified
   - to register multiple SIMs in turn
   - to subsequently monitor the paging channels allocated to each SIM for network notifications
   - to correctly associate control channels with the SIM to which they were assigned by the BSS
4. that the user interface and associated elements in the ME be adapted to handle multiple SIMs. For example
• users need to be able to select which SIM is to be used for making calls; while a default may work in some circumstances, it is not difficult to envisage situations where charging policies and contract details make it preferable for certain calls to certain numbers, or calls made a particular times, to be charged to one specific subscriber account associated with the selected SIM.
• users may need to know the SIM to which any incoming calls and data messages are directed
• call logs and other administrative details would need to take account of the existence of more than one SIM
• users may need or wish to selectively disable SIMs in their handset, in which case it would revert to conventional single-SIM operation.

Note that some of these tasks can be simplified by making use of the memory storage available in each SIM; for example, SMS messages could be stored in the memory of the SIM to which they were addressed.

The software in the ME would also have to correctly handle call collisions, where incoming calls to one SIM occur during an incoming call to another SIM.

It is not,possible to take both calls simultaneously; while this invention permits an ME to instantiate multiple logical control channels (which all share the same physical channel) it does not permit multiple dedicated traffic channels on a single device. Only one SIM can be in active traffic mode at any one time. Note however that call collisions between incoming calls on different SIMs are in principle no different to call collisions on a single SIM, and can be handled in the same way.

In an enhancement to this invention, an ME supporting multiple SIMs would also support a separate International Mobile Equipment Identifier (*IMEI*) for each SIM or SIM socket.

The IMEI is a unique number allocated to an ME at manufacture time, which also contains indications of manufacturer and modes. According to GSM 02.16
*"A network operator can make administrative use of the IMEI in the following manner*:
*Three registers are defined*, *known as* "*white lists*", "*grey lists*" *and* "*black lists*". *The use of such lists is at the operators' discretion.*
   - *The white list is composed of all number series of equipment identities that are permitted for use*.
   - *The black list contains all equipment identities that belong to equipment that need to be barred*.
   - *Besides the black and white list, administrations have the possibility to use a grey list. Equipments on the grey list are not barred (unless on the black list or not on the white list), but are tracked by the network (for evaluation or other purposes)*.
*It shall be possible to perform the IMEI check at any access attempt, except IMSI detach, and during an established call at any time when a dedicated radio resource is available, in accordance with the security policy of the PLMN operator. The network shall terminate any access attempt or ongoing call when receiving any of the answers* "*black-listed*" *(i.e*., *on the black list) or "unknown" equipment (i. e., not on the white list) from the EIR."*

It should be noted that while the allocation of an IMEI to an ME is compulsory, its interrogation by the network is optional, and IMEIs are not registered and tracked in the same way that IMSIs are. While a network could in theory check IMEIs for simultaneous usage, this is not envisaged in the GSM standards. However, allocations of a separate IMEI to each SIM or SIM socket on an ME would serve to prevent any problems which may be caused by the same IMEI being involved in two separate IMSI registrations.

This invention allows multiple GSM SIMs to function in a single handset, without needing to disable all but one of the SIMs and thereby missing out on incoming calls and message notifications. This is of great utility to mobile telephone users seeking to minimise roaming charges, and also to those users who need to maintain access to two subscriber accounts at all times.

Although the present invention has been described with reference to particular embodiments, it will be appreciated that modifications may be effected whilst remaining within the scope of the present invention as defined by the appended claims.

## Claims

1. A method, the method comprising:
registering multiple subscriber identities associated with a wireless telecommunications device using the same common physical control channel, the multiple subscriber identities having been allocated by one or a plurality of wireless networks and having respective multiple instances of logical control channels assigned, thereby
enabling, on the common physical control channel of a single wireless network, simultaneous use of the said multiple subscriber identities, the respective logical control channels for the multiple subscriber identities being carried on the same common physical control channel.

2. A method according to claim 1 in which the wireless telecommunications device is a GSM mobile telephone handset and the subscriber identity is contained in an IMSI.

3. A method according to claim 1 or 2 in which the multiple subscriber identities are made available on the wireless telecommunications device either via separate SIMs or multiplexed on a single SIM module.

4. A method according to any one of the preceding claims in which the wireless telecommunications device is enabled to identify a wireless network on which all of the said subscriber identities may be registered, giving preference to a wireless network which is the home network for at least one of the said subscriber identities.

5. A method according to any one of the preceding claims in which the wireless telecommunications device
a. is enabled to support multiple active instances of logical control channels each of which is assigned to a specific subscriber identity; and
b. registers each subscriber identity with the wireless network in turn; and
c. moves each subscriber identity to idle mode when it monitors the logical control channels assigned to each; and
d. responds to a notification on the logical control channel addressed to a specific subscriber identity by requesting dedicated traffic channel for that subscriber identity and moving to active traffic mode only for that subscriber identity while other subscriber identities registered on the handset remain in idle mode.

6. A method according to any one of the preceding claims in which each subscriber identity is assigned a different unique ME number.

7. A method according to any one of the preceding claims in which the subscriber identity used by the wireless telecommunications device when initiating connections to the wireless network is
a. a default subscriber identity selected by the user of the device; or
b. a subscriber identity selected by the user of each wireless telecommunications device each time a connections is initiated; or
c. a subscriber identity selected according to a set of rules set up by the user taking into account any or all of the location of the device, the destination of the connection, the time the connection is being made, and the history of connections made by the wireless telecommunications device.

8. A method according to any one of the preceding claims in which the wireless telecommunications device maintains separate memory storage for data and messages associated with each subscriber identity.

9. A method according to any one of the preceding claims in which any or all of the subscriber identities may be selectively disabled by the user.

10. A method according to any one of the preceding claims in which in the event that not all subscriber identities can be registered on a single wireless network the user is allowed to choose which subscriber identities shall be disabled.

11. A method according to any one of the preceding claims wherein the multiple subscriber identities have been allocated by a plurality of wireless networks.

12. A wireless telecommunications device comprising means enabling the wireless telecommunications device to operate in accordance with a method as claimed in any one of claims 1 to 11.

13. An operating system for causing a wireless telecommunications device to operate in accordance with a method as claimed in any one of claims 1 to 11.

14. The wireless telecommunications device of claim 12, wherein the wireless telecommunications device is a mobile telephone, a smartphone, a desktop computer, a laptop computer, a personal digital assistant, a digital cameras or a digital music player.

## Patentansprüche

1. Verfahren, wobei das Verfahren Folgendes umfasst:
Aufzeichnen mehrerer Teilnehmerkennungen, die einer drahtlosen Telekommunikationsvorrichtung zugeordnet sind, unter Verwendung desselben gemeinsamen physikalischen Steuerkanals, wobei die mehreren Teilnehmerkennungen durch ein oder mehrere drahtlose Netze zugewiesen worden sind und mehreren entsprechenden Instanzen logischer Steuerkanäle zugeteilt sind, um dadurch
auf dem gemeinsamen physikalischen Steuerkanal eines einzigen drahtlosen Netzes die gleichzeitige Verwendung der mehreren Teilnehmerkennungen zu ermöglichen, wobei die jeweiligen logischen Steuerkanäle für die mehreren Teilnehmerkennungen auf dem gemeinsamen physikalischen Steuerkanal übertragen werden.

2. Verfahren nach Anspruch 1, wobei die drahtlose Telekommunikationsvorrichtung ein GSM-Mobiltelephonapparat ist und die Teilnehmerkennung in einer IMSI enthalten ist.

3. Verfahren nach Anspruch 1 oder 2, wobei die mehreren Teilnehmerkennungen in der drahtlosen Telekommunikationsvorrichtung entweder über separate SIMs oder multiplexiert auf einem einzigen SIM-Modul verfügbar gemacht werden.

4. Verfahren nach einem der vorhergehenden Ansprüche, wobei die drahtlose Telekommunikationsvorrichtung in der Lage ist, ein drahtloses Netz zu identifizieren, in dem alle Teilnehmerkennungen aufgezeichnet werden können, wobei einem drahtlosen Netz, das das Heimatnetz für wenigstens eine der Teilnehmerkennung ist, der Vorzug gegeben wird.

5. Verfahren nach einem der vorhergehenden Ansprüche, wobei die drahtlose Telekommunikationsvorrichtung
a. in der Lage ist, mehrere aktive Instanzen logischer Steuerkanäle zu unterstützen, wovon jeder eine spezifische Teilnehmerkennung zugeteilt ist; und
b. jede Teilnehmerkennung mit dem drahtlosen Netz der Reihe nach aufzeichnet; und
c. jede Teilnehmerkennung in den Leerlaufmodus versetzt, wenn sie die logischen Steuerkanäle, denen jede von ihnen zugeteilt ist, überwacht; und
d. auf eine Meldung auf dem logischen Steuerkanal, die an eine bestimmte Teilnehmerkennung gerichtet ist, antwortet, indem sie einen dedizierten Verkehrskanal für diese Teilnehmerkennung anfordert und nur diese Teilnehmerkennung in den aktiven Verkehrsmodus versetzt, während andere Teilnehmerkennungen, die im Apparat aufgezeichnet sind, im Leerlaufmodus bleiben.

6. Verfahren nach einem der vorhergehenden Ansprüche, wobei jeder Teilnehmerkennung eine andere eindeutige ME-Nummer zugeteilt ist.

7. Verfahren nach einem der vorhergehenden Ansprüche, wobei die Teilnehmerkennung, die von der drahtlosen Telekommunikationsvorrichtung verwendet wird, wenn Verbindungen zu dem drahtlosen Netz hergestellt werden,
a. eine voreingestellte Teilnehmerkennung ist, die vom Anwender der Vorrichtung ausgewählt wird; oder
b. eine Teilnehmerkennung ist, die vom Anwender jeder drahtlosen Telekommunikationsvorrichtung jedes Mal gewählt wird, wenn eine Verbindung hergestellt wird; oder
c. eine Teilnehmerkennung ist, die gemäß einer Menge von Regeln gewählt wird, die durch den Anwender aufgestellt werden und den Ort der Vorrichtung und/oder das Verbindungsziel und/oder die Zeit der aufgebauten Verbindung und/oder die Historie von Verbindungen, die durch die drahtlose Telekommunikationsvorrichtung aufgebaut wurden, berücksichtigen.

8. Vorrichtung nach einem der vorhergehenden Ansprüche, wobei die drahtlose Telekommunikationsvorrichtung einen getrennten Speicher für Daten und für Nachrichten, die jeder Teilnehmerkennung zugeordnet sind, aufrechterhält.

9. Verfahren nach einem der vorhergehenden Ansprüche, wobei irgendwelche oder alle Teilnehmerkennungen vom Anwender wahlweise gesperrt werden können.

10. Verfahren nach einem der vorhergehenden Ansprüche, wobei der Anwender in dem Fall, in dem nicht alle Teilnehmerkennungen in einem einzigen drahtlosen Netz aufgezeichnet werden können, wählen kann, welche Teilnehmerkennungen gesperrt werden sollen.

11. Verfahren nach einem der vorhergehenden Ansprüche, wobei die mehreren Teilnehmerkennungen durch mehrere drahtlose Netze zugewiesen worden sind.

12. Drahtlose Telekommunikationsvorrichtung, die Mittel umfasst, die der drahtlosen Telekommunikationsvorrichtung ermöglichen, gemäß einem Verfahren nach einem der Ansprüche 1 bis 11 zu arbeiten.

13. Betriebssystem, um eine drahtlose Telekommunikationsvorrichtung dazu zu veranlassen, gemäß einem Verfahren nach einem der Ansprüche 1 bis 11 zu arbeiten.

14. Drahtlose Telekommunikationsvorrichtung, wobei die drahtlose Telekommunikationsvorrichtung ein Mobiltelephon, ein Smartphone, ein Desktop-Computer, ein Laptop-Computer, ein persönlicher digitaler Assistent, eine Digitalkamera oder ein digitales Musikabspielgerät ist.

## Revendications

1. Procédé, le procédé comprenant:
l'enregistrement d'identités d'abonnés multiples associées à un dispositif de télécommunications sans fil utilisant le même canal de commande physique commun, les identités d'abonnés multiples ayant été allouées par un ou une pluralité de réseaux sans fil et ayant de multiples instances respectives de canaux de commande logiques attribués, pour ainsi
permettre, sur le canal de commande physique commun d'un réseau sans fil unique, l'utilisation simultanée desdites identités d'abonnés multiples, les canaux de commande logiques respectifs pour les identités d'abonnés multiples étant acheminés sur le même canal de commande physique commun.

2. Procédé selon la revendication 1, dans lequel le dispositif de télécommunications sans fil est un combiné téléphonique mobile GSM et l'identité d'abonné est contenue dans une identité IMSI.

3. Procédé selon la revendication 1 ou 2, dans lequel les identités d'abonnés multiples sont rendues disponibles sur le dispositif de télécommunications sans fil soit via des modules SIM séparés, soit multiplexées sur un module SIM unique.

4. Procédé selon l'une quelconque des revendications précédentes, dans lequel le dispositif de télécommunications sans fil est capable d'identifier un réseau sans fil sur lequel toutes lesdites identités d'abonnés peuvent être enregistrées, la préférence allant à un réseau sans fil qui est le réseau nominal d'au moins l'une desdites identités d'abonnés.

5. Procédé selon l'une quelconque des revendications précédentes, dans lequel le dispositif de télécommunications sans fil
a. est capable de prendre en charge de multiples instances actives de canaux de commande logiques dont chacun est affecté à une identité d'abonné spécifique ; et
b. enregistre tour à tour chaque identité d'abonné sur le réseau sans fil ; et
c. fait passer chaque identité d'abonné en mode d'attente lorsqu'il surveille les canaux de commande logiques affectés à chacune d'entre elles ; et
d. répond à une notification adressée sur le canal de commande logique à une identité d'abonné spécifique en demandant un canal de trafic dédié à cette identité d'abonné et en ne passant au mode de trafic actif que pour cette identité d'abonné pendant que d'autres identités d'abonnés enregistrées sur le combiné restent en mode inactif.

6. Procédé selon l'une quelconque des revendications précédentes, dans lequel un numéro ME unique différent est affecté à chaque identité d'abonné.

7. Procédé selon l'une quelconque des revendications précédentes, dans lequel l'identité d'abonné utilisée par le dispositif de télécommunications sans fil lors de l'établissement de connexions au réseau sans fil est
a. une identité d'abonné par défaut sélectionnée par l'utilisateur du dispositif ; ou
b. une identité d'abonné sélectionnée par l'utilisateur de chaque dispositif de télécommunications sans fil chaque fois qu'une connexion est établie ; ou
c. une identité d'abonné sélectionnée conformément à un ensemble de règles définies par l'utilisateur et tenant compte de l'un quelconque ou de la totalité des paramètres suivants : la position du dispositif, la destination de la connexion, l'instant où la connexion est établie, et l'historique des connexions établies par le dispositif de télécommunications sans fil.

8. Procédé selon l'une quelconque des revendications précédentes, dans lequel le dispositif de télécommunications sans fil conserve une mémoire séparée pour le stockage de données et de messages associés à chaque identité d'abonné.

9. Procédé selon l'une quelconque des revendications précédentes, dans lequel l'une quelconque ou la totalité des identités d'abonnés peut ou peuvent être sélectivement désactivée(s) par l'utilisateur.

10. Procédé selon l'une quelconque des revendications précédentes, dans lequel, lorsque toutes les identités d'abonnés ne peuvent pas être enregistrées sur un même réseau sans fil, l'utilisateur a la possibilité de choisir les identités d'abonnés qui seront désactivées.

11. Procédé selon l'une quelconque des revendications précédentes, dans lequel les multiples identités d'abonnés ont été allouées par une pluralité de réseaux sans fil.

12. Dispositif de télécommunications sans fil comprenant un moyen permettant au dispositif de télécommunications sans fil de fonctionner conformément à un procédé selon l'une quelconque des revendications 1 à 11.

13. Système d'exploitation destiné à faire en sorte qu'un dispositif de télécommunications sans fil fonctionne conformément à un procédé selon l'une quelconque des revendications 1 à 11.

14. Dispositif de télécommunications sans fil selon la revendication 12, dans lequel le dispositif de télécommunications est un téléphone mobile, un téléphone intelligent, un ordinateur de bureau, un ordinateur portable, un assistant numérique personnel, un appareil photo numérique ou un lecteur de musique numérique.
